# EUROPEAN PATENT SPECIFICATION

(11) **EP 2 851 233 B1**
(45) Date of publication and mention of the grant of the patent: **31.01.2018**
(21) Application number: 14185096.6
(22) Date of filing: 17.09.2014
(51) Int. Cl.: B60K 35/00, G02B 27/01, B60R 7/06, B60R 11/00, F02B 67/06

(54) **HEAD-UP DISPLAY DEVICE**
HEAD-UP-ANZEIGEVORRICHTUNG
DISPOSITIF À AFFICHAGE TÊTE HAUTE

(30) Priority: 18.09.2013 JP 2013193300
(43) Date of publication of application: 25.03.2015
(73) Proprietor: Yazaki Corporation, Minato-ku Tokyo 108-8333 (JP); Nidec Sankyo Corporation, Suwa-gun, Nagano 393-8511 (JP)
(72) Inventor: Mikami, Hirobumi, Shizuoka 427-0024 (JP); Ando, Masaaki, Nagano 393-8511 (JP); Shingu, Yuji, Nagano 393-8511 (JP)
(74) Representative: Schmitt-Nilson Schraud Waibel Wohlfrom Patentanwälte Partnerschaft mbB

(56) References cited:
- EP-A2- 0 836 107
- WO-A2-2008/063632
- US-A- 4 854 632
- US-A- 5 005 010
- US-A- 5 237 455
- US-A1- 2013 194 518

## Description

The present invention relates to a head-up display device for displaying information with the use of a combiner.

Conventionally, a head-up display device for displaying information with the use of a combiner has been known (see, for example, Patent Literature 1). The head-up display device described in Patent Literature 1 includes a hollow-shaped main body having an opening part in its upper face, an indicator which is accommodated in the main body, a combiner which is movable between a position where the combiner rises so as to protrude from the upper face of the main body and a position where the combiner is accommodated into the main body, and a cover body for closing the opening part of the main body. The cover body is structured of a first cover part for closing a rear side half of the opening part and a second cover part for closing a front side half of the opening part.

In the head-up display device described in Patent Literature 1, the first cover part includes a pair of first arm parts which are disposed on both sides in a widthwise direction of the first cover part. The first arm part is turnable around a shaft disposed on a rear side of the main body. In a state that the first cover part closes the rear side half of the opening part, when the first arm part is turned around the shaft and the first cover part is moved to a rear side of the main body, the rear side half of the opening part is opened. Further, the second cover part includes a pair of second arm parts which are disposed on both sides in a widthwise direction of the second cover part and the second arm part is turnable around a shaft disposed on a front side of the main body. In a state that the second cover part closes the front side half of the opening part, when the second arm part is turned around the shaft and the second cover part is moved to a front side of the main body, the front side half of the opening part is opened.

[PTL 1] Japanese Patent Laid-Open No. 2012-254707

In the head-up display device described in Patent Literature 1, the cover body for closing the opening part of the main body is structured of two cover parts, i.e., the first cover part and the second cover part. Further, in the head-up display device, a pair of the first arm parts is formed in the first cover part and a pair of the second arm parts is formed in the second cover part. Therefore, in the head-up display device, the sizes of the first cover part and the second cover part are large. Accordingly, in the head-up display device, a large space is required as an arrangement space for the first cover part which is disposed on the rear side of the main body when the rear side half of the opening part is opened and, when the front side half of the opening part is opened, a large space is required as an arrangement space for the second cover part which is disposed on the front side of the main body. As a result, the size of the head-up display device is large.

US 4 854 632 A discloses a storage compartment for recessed mounting into the top of the instrument panel of a vehicle including a flexible cover for movement between a position closing a storage container and an open position in which the cover extends around the storage container. The flexible cover is a tambour-type cover with an endless loop connection and which is guidably supported by the storage container.

US 5 005 010 A discloses a head-up display for a motor vehicle having a dashboard with a top surface, which comprises a projector enclosed in the dashboard, the projector including a light source, an object from which visual information is to be displayed and a lens, an aperture formed on the top surface of the dashboard which is covered by the lens or a transparent member for preventing dust or the like from entering thereinto, a reflecting member provided in front of a driving seat on which light projected from the projector through the aperture is reflected to produce the image of the visual information thereon, and a reflection preventing member for preventing the reflection of light entering from the outside of the vehicle on the lens of the projector or on the transparent member. An antireflection coating such as a black paint is applied on the upper surface of the reflection preventing member. The reflection preventing member being shiftable between a first position in which the member covers the lens or the transparent member to close the aperture and a second position in which the member uncovers the lens or the transparent member to open the aperture. The reflection preventing member is shifted to the second position from the first position only when the head-up display is employed. Accordingly, it can prevent external light from being reflected on the lens or the transparent member toward eyes of the driver of the vehicle.

US 2013 194 518 A1 relates to a head-up display device, including a projector for generating a light beam carrying information to be displayed, a combiner having a display position for displaying the information in the field of vision of a user, and an optical system defining an optical path between the projector and the combiner when the latter is in the display position thereof, for directing the light beam onto the combiner. The optical system includes a first and a second deflecting mirror. The first mirror is arranged for receiving the light beam from the projector and for sending said light beam to the second mirror, the latter being arranged for sending the light beam over the optical path toward the combiner. An actuation system is provided for adjusting the length of the optical path between the projector and the combiner by positioning the first and second deflecting mirrors.

In view of the problem described above, an objective of the present invention is to provide a head-up display device whose size is capable of being reduced even when a shutter mechanism is provided for closing an opening part formed in a housing.

To achieve the above mentioned objective, the present invention provides a head-up display device according to independent claim 1.

In the present invention, it is preferable that the shutter mechanism includes two pieces of the belt which are disposed on both end sides in the direction perpendicular to the longitudinal direction of the belt in the inside of the housing, the belt is an endless belt formed in a loop shape, and each of both end sides in the longitudinal direction of the shutter plate is fixed to each of the two belts. According to this structure, rattling of the shutter plates is prevented when the shutter plates are to be moved to a narrow space in the inside of the housing by using the belt. Therefore, the shutter plates are smoothly moved to a narrow space in the inside of the housing.

In the present invention, it is preferable that the belt drive mechanism includes three or more pulleys over which the belt is stretched. According to this structure, even when a space in the housing into which the shutter plates are accommodated is complicated, the belt can be disposed along the complicated space. Therefore, even when an accommodation space for the shutter plates is complicated, the shutter plates can be moved to the complicated space and accommodated.

In the present invention, it is preferable that the head-up display device includes a combiner drive mechanism for moving the combiner between the rising-up position and the accommodated position. According to this structure, the combiner can be automatically moved between the rising-up position and the accommodated position. Further, in this case, for example, the combiner drive mechanism moves the combiner between the rising-up position and the accommodated position in conjunction with movement of the belt.

In the present invention, the head-up display device includes a light baffle which is accommodated in the housing and a motor for turning the light baffle.

As described above, in the present invention, even when the shutter mechanism configured to close the opening part is arranged in the head-up display device, the size of the head-up display device can be reduced.
Figs. 1(A) and 1(B) are perspective views showing a head-up display device in accordance with an embodiment of the present invention. Fig. 1(A) is a view showing a state that a combiner rises up and Fig. 1(B) is a view showing a state that the combiner is accommodated in a housing.
Fig. 2 is a side view for explaining an internal structure of the head-up display device shown in Fig. 1(A).
Fig. 3 is a perspective view showing a main portion of the head-up display device shown in Fig. 2.
Fig. 4 is a perspective view showing the main portion of the head-up display device shown in Fig. 3 which is viewed in another direction.
Fig. 5 is a perspective view showing belts, pulleys and shutter plates shown in Fig. 3.
Fig. 6 is a side view for explaining a state of the head-up display device when the combiner shown in Fig. 2 is moved between a rising-up position and an accommodated position.
Fig. 7 is a side view for explaining a state of the head-up display device when the combiner shown in Fig. 2 is moved between the rising-up position and the accommodated position.
Fig. 8 is a side view for explaining a state of the head-up display device when the combiner shown in Fig. 2 is located at the accommodated position.

An embodiment of the present invention will be described below with reference to the accompanying drawings.

### (Structure of Head-up Display Device)

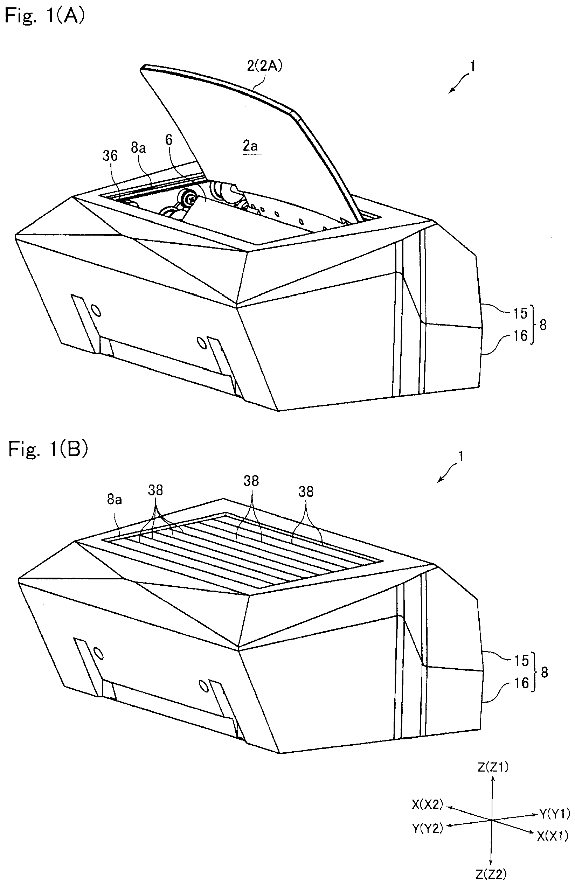

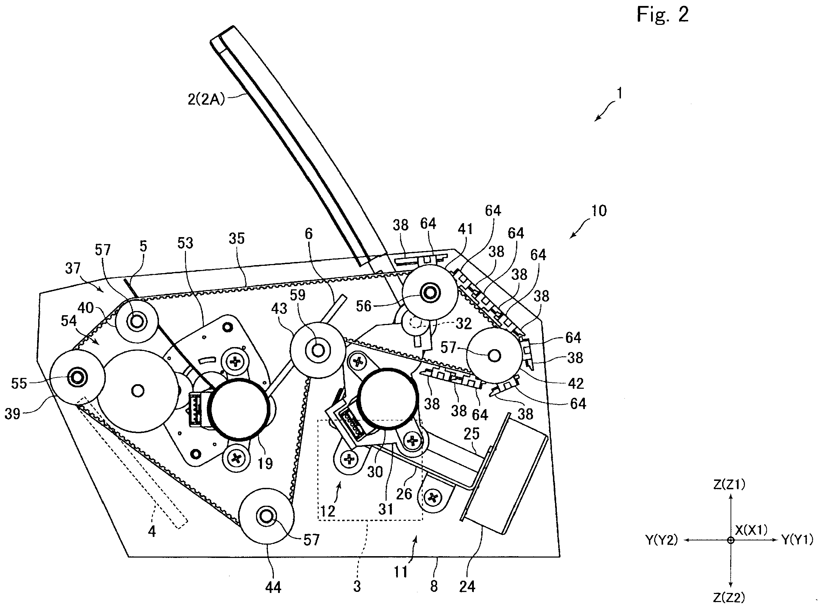

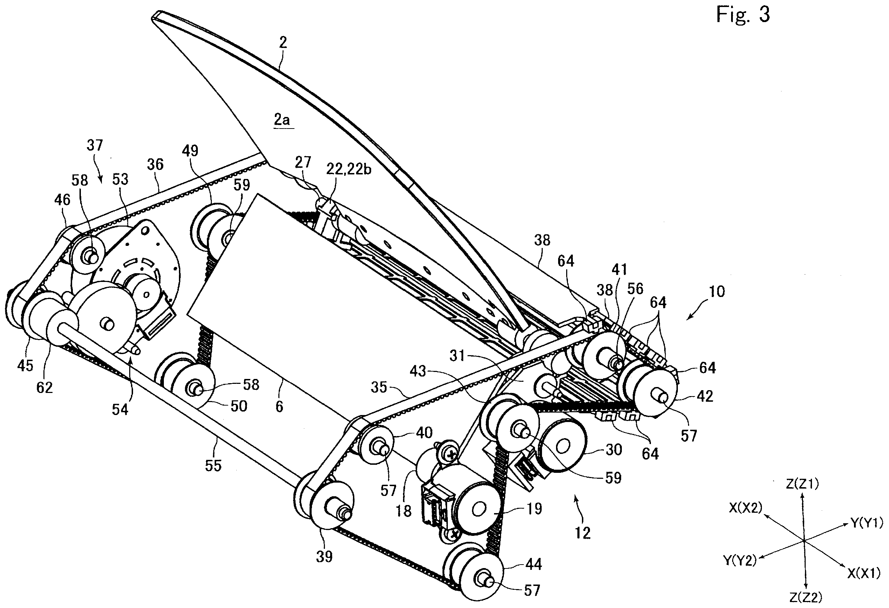

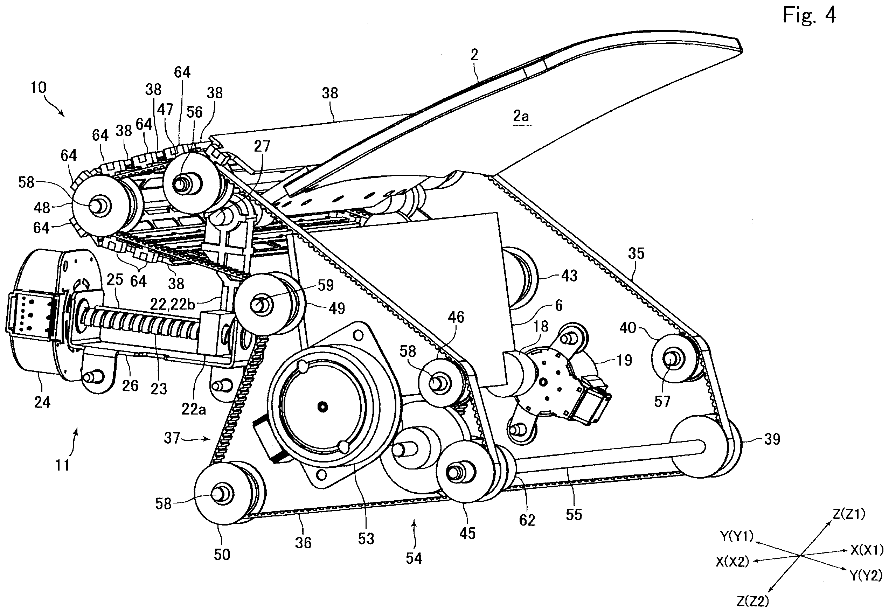

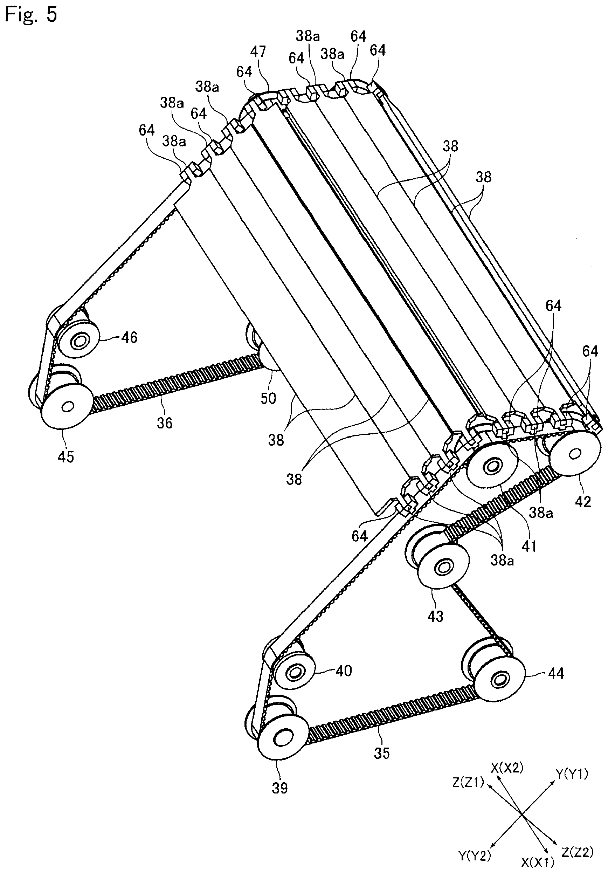

Figs. 1(A) and 1(B) are perspective views showing a head-up display device 1 in accordance with an embodiment of the present invention. Fig. 1(A) is a view showing a state that a combiner 2 rises up and Fig. 1(B) is a view showing a state that the combiner 2 is accommodated in a housing 8. Fig. 2 is a side view for explaining an internal structure of the head-up display device 1 shown in Figs. 1(A) and 1(B). Fig. 3 is a perspective view showing a main portion of the head-up display device 1 shown in Fig. 2. Fig. 4 is a perspective view showing the main portion of the head-up display device 1 shown in Fig. 3 which is viewed in another direction. Fig. 5 is a perspective view showing belts 35 and 36, pulleys 39 through 50 and shutter plates 38 shown in Fig. 3.

In the following descriptions, as shown in Figs. 1(A) and 1(B) and the like, respective three directions perpendicular to each other are referred to as an "X" direction, a "Y" direction and a "Z" direction. The "X" direction is a "right and left direction", the "Y" direction is a "front and rear direction" and the "Z" direction is an "upper and lower direction". Further, an "X1" direction side is referred to as a "right" side, an "X2" direction side is referred to as a "left" side, a "Y1" direction side is a "rear (back)" side, a "Y2" direction side is a "front" side, a "Z1" direction side is an "upper" side, and the "Z2" direction side is a "lower" side.

A head-up display device 1 in this embodiment (hereinafter, referred to as an "HUD device 1") is a device for displaying information to an operator by using a combiner 2 and is, for example, placed for use so as to be embedded in a recessed part formed in an instrument panel (dashboard) of a car. In this embodiment, a rear side ("Y1" direction side) is a front side of a car and a front side ("Y2" direction side) is a driver side.

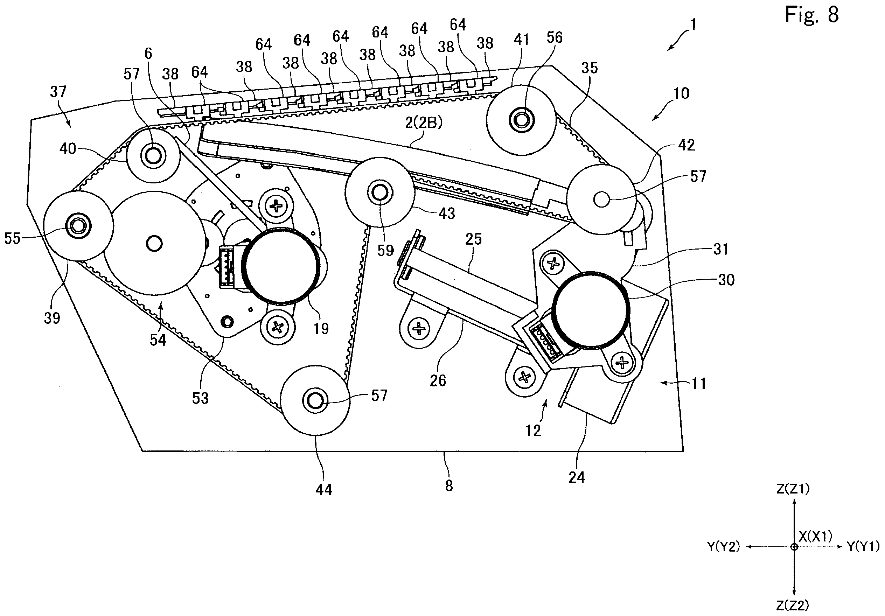

The HUD device 1 includes, as shown in Fig. 2, a display 3, a reflection mirror 4, a lens 5 and a light baffle 6 in addition to the combiner 2. The display 3, the reflection mirror 4, the lens 5 and the light baffle 6 are accommodated in a housing 8. An opening part 8a is formed in an upper face of the housing 8 and the HUD device 1 includes a shutter mechanism 10 configured to close the opening part 8a. The combiner 2 is movable between a rising-up position 2A (see Fig. 2) where the combiner 2 rises up so as to protrude from the opening part 8a and an accommodated position 2B (see Fig. 8) where the combiner 2 is accommodated in the housing 8. The HUD device 1 includes a combiner drive mechanism 11 configured to move the combiner 2 between the rising-up position 2A and the accommodated position 2B. Further, the HUD device 1 includes an angle adjustment mechanism 12 configured to adjust an angle of the combiner 2 located at the rising-up position 2A.

The housing 8 is structured of an upper housing 15 and a lower housing 16 which are divided in an upper and lower direction. The opening part 8a is formed so as to penetrate through an upper face portion of the upper housing 15. The opening part 8a is formed in a substantially rectangular shape. Specifically, the opening part 8a is formed in a substantially rectangular shape whose longitudinal direction is the right and left direction and whose short widthwise direction is the front and rear direction.

The display 3 is, for example, a liquid crystal display which emits light (display light) when the HUD device 1 is used. The display 3 is fixed on a lower face side and a rear face side in an inside of the housing 8 and the display 3 emits display light toward a front side. The reflection mirror 4 is fixed on a lower face side and a front face side in the inside of the housing 8. The reflection mirror 4 reflects light emitted from the display 3 toward an obliquely rear upper side.

The lens 5 is disposed at a position where light reflected by the reflection mirror 4 is passed. In other words, the lens 5 is fixed on an obliquely rear upper side with respect to the reflection mirror 4 in the inside of the housing 8. Further, the lens 5 is disposed to be inclined to a front side toward an upper side. A virtual image is formed on the combiner 2 by the lens 5 when the HUD device 1 is operated.

The light baffle 6 is formed in a substantially rectangular flat plate shape whose longitudinal direction is the right and left direction. A turning shaft (not shown) disposed with the right and left direction as an axial direction is fixed at one end in a short widthwise direction of the light baffle 6. The turning shaft is turnably supported by a right side plate (not shown) fixed to a right end side in the inside of the housing 8 and a left side plate (not shown) fixed to a left end side in the inside of the housing 8. The turning shaft is disposed on an obliquely rear upper side with respect to a lower end of the lens 5.

The turning shaft is connected with a motor 19 through a coupling 18. The motor 19 is a stepping motor. The light baffle 6 is turned by power of the motor 19 with the turning shaft as a turning center. In this embodiment, when the combiner 2 is located at the rising-up position 2A, the light baffle 6 is, as shown in Fig. 2, disposed on a lower side with respect to the combiner 2. Further, in this case, the light baffle 6 is inclined to a rear side toward an upper side. On the other hand, when the combiner 2 is located at the accommodated position 2B, the light baffle 6 is disposed so as to be substantially parallel to the lens 5. In accordance with an embodiment of the present invention, the motor 19 may be a motor other than a stepping motor.

The combiner 2 is, as a whole, formed in a substantially rectangular curved plate shape whose longitudinal direction is the right and left direction. Further, the combiner 2 is formed in a curved plate shape so that, when the combiner 2 is located at the rising-up position 2A, a display face 2a facing a driver side is a concave curved surface. A display part where the display face 2a is formed is, for example, structured of a half mirror. A display light from the display 3 is incident on the combiner 2 located at the rising-up position 2A through the reflection mirror 4 and the lens 5. Further, the combiner 2 located at the rising-up position 2A displays a virtual image based on a display light from the display 3. A driver of a vehicle is capable of visually observing the virtual image displayed on the combiner 2 in an overlapped state with a scenery on a front side of the vehicle.

The combiner drive mechanism 11 is connected with a left lower end of the combiner 2. The combiner drive mechanism 11 includes, as shown in Fig. 4, a connection member 22 having a female screw part 22a in which a female screw is formed, a lead screw 23 which is engaged with the female screw formed in the connection member 22, a motor 24 with which one end of the lead screw 23 is connected, and a guide shaft 25 for guiding the connection member 22 in an axial direction of the lead screw 23. The motor 24 is a stepping motor. The motor 24 and the guide shaft 25 are fixed to a bracket 26. Further, the other end side of the lead screw 23 is rotatably supported by the bracket 26. The bracket 26 is fixed to the left side plate which is fixed to the housing 8. In accordance with an embodiment of the present invention, the motor 24 may be a motor other than a stepping motor.

The connection member 22 is, in addition to the female screw part 22a, provided with a connecting part 22b which rises toward an obliquely rear upper side from the female screw part 22a (see Fig. 4). The female screw part 22a is, in addition to the female screw, formed with a through-hole through which the guide shaft 25 is passed. A through-hole penetrating in the right and left direction is formed on an upper end side of the connecting part 22b. A fixed shaft 27 which is fixed to a left lower end of the combiner 2 is passed through the through-hole. The fixed shaft 27 is fixed to the left lower end of the combiner 2 with the right and left direction as an axial direction and is protruded from the combiner 2 to the left side. The fixed shaft 27 is relatively turnable with respect to the connecting part 22b. In accordance with an embodiment of the present invention, the fixed shaft 27 may be integrally formed with the combiner 2.

The axial directions of the lead screw 23 and the guide shaft 25 are disposed so as to be gradually inclined to an upper side toward a front side. Further, the lead screw 23 and the guide shaft 25 are adjacently disposed to each other in the right and left direction. When the motor 24 is rotated and thereby the lead screw 23 is rotated, the connection member 22 is moved along the lead screw 23 and the guide shaft 25. When the connection member 22 is moved along the lead screw 23 and the guide shaft 25, the combiner 2 is moved together with the fixed shaft 27 which is passed through the through-hole of the connecting part 22b. In this embodiment, when the connection member 22 is moved along the lead screw 23 and the guide shaft 25, a motor 30 described below which structures an angle adjustment mechanism 12 is rotated and thereby the combiner 2 is relatively turned with respect to the connecting part 22b with the fixed shaft 27 as a turning center.

In this embodiment, the combiner 2 located at the rising-up position 2A is disposed so as to incline to a front side toward an upper side (see Fig. 2). Further, the combiner 2 located at the accommodated position 2B is set in a state falling down to a front side relative to the position of the combiner 2 located at the rising-up position 2A and is disposed so as to gradually incline to the upper side toward the front side (see Fig. 8). Further, in this embodiment, when the combiner 2 is located at the rising-up position 2A, the female screw part 22a of the connection member 22 is engaged with obliquely front upper sides of the lead screw 23 and the guide shaft 25 and, in this state, when the connection member 22 is moved by power of the motor 24 to an obliquely rear lower side along the lead screw 23 and the guide shaft 25, the combiner 2 located at the rising-up position 2A is moved to the accommodated position 2B. Further, when the combiner 2 is located at the accommodated position 2B, the female screw part 22a is engaged with obliquely rear lower sides of the lead screw 23 and the guide shaft 25 and, in this state, when the connection member 22 is moved by power of the motor 24 to an obliquely front upper side along the lead screw 23 and the guide shaft 25, the combiner 2 located at the accommodated position 2B is moved to the rising-up position 2A.

As described above, the combiner 2 is moved between the rising-up position 2A and the accommodated position 2B by power of the motor 24. The HUD device 1 in this embodiment includes a guide member (not shown) for guiding the combiner 2 between the rising-up position 2A and the accommodated position 2B.

The angle adjustment mechanism 12 is connected with a right lower end of the combiner 2. The angle adjustment mechanism 12 includes a motor 30. The motor 30 is a stepping motor. The motor 30 is fixed to a bracket 31. Further, the motor 30 is connected with a fixed shaft 32 (see Fig. 2) fixed to the right lower end of the combiner 2 through a gear train. The fixed shaft 32 is fixed to the right lower end of the combiner 2 with the right and left direction as an axial direction and is protruded from the combiner 2 to the right side. Further, the fixed shaft 32 is coaxially disposed with the fixed shaft 27 which is fixed to the left lower end of the combiner 2. A right end side of the fixed shaft 32 is attached to the bracket 31 in a relatively turnable manner. When the motor 30 is rotated, the combiner 2 is turned together with the fixed shaft 32 and thereby an angle of the combiner 2 located at the rising-up position 2A is adjusted. In this embodiment, as described above, also in a case that the connection member 22 is moved along the lead screw 23 and the guide shaft 25, the motor 30 is rotated. Further, the fixed shaft 32 may be formed with the combiner 2 integrally. Further, the motor 30 may be a motor other than a stepping motor.

The shutter mechanism 10 includes belts 35 and 36, a belt drive mechanism 37 for moving the belts 35 and 36 in their longitudinal directions, and a plurality of shutter plates 38 for closing the opening part 8a. The shutter mechanism 10 in this embodiment includes two belts 35 and 36. Further, the shutter mechanism 10 is, for example, provided with eight shutter plates 38. The belts 35 and 36 and the belt drive mechanism 37 are accommodated in the inside of the housing 8.

The belts 35 and 36 are endless belts formed in a loop shape. Further, the belts 35 and 36 are toothed belts and a plurality of teeth is formed on one face of each of the belts 35 and 36. The belt 35 is disposed on a right end side in the inside of the housing 8 and the belt 36 is disposed on a left end side in the inside of the housing 8. Further, the belts 35 and 36 are disposed on outer sides in the right and left direction relative to the opening part 8a of the housing 8.

The belt drive mechanism 37 includes a plurality of pulleys 39 through 44 over which the belt 35 is stretched, a plurality of pulleys 45 through 50 over which the belt 36 is stretched, a motor 53, and a gear train 54 for transmitting power of the motor 53 to the belts 35 and 36. In this embodiment, the belt 35 is stretched over six pulleys 39 through 44 and the belt 36 is stretched over six pulleys 45 through 50.

The pulleys 39 through 50 are disposed so as to rotate with the right and left direction as an axial direction of rotation. The pulleys 39 and 45 are disposed on a front upper face side in the inside of the housing 8. The pulleys 40 and 46 are disposed on obliquely rear upper sides relative to the pulleys 39 and 45. The pulleys 42 and 48 are disposed on a rear upper face side in the inside of the housing 8. The pulleys 41 and 47 are disposed on obliquely front upper sides relative to the pulleys 42 and 48. The pulleys 43 and 49 are disposed between the pulleys 39 and 45 and the pulleys 42 and 48 in the front and rear direction. The pulleys 44 and 50 are disposed on lower sides relative to the pulleys 43 and 49.

The pulleys 39 and 45 are respectively fixed to both end sides of a rotation shaft 55 which is disposed with the right and left direction as an axial direction. The both end sides of the rotation shaft 55 are rotatably supported by the right side plate and the left side plate respectively which are fixed in the inside of the housing 8. The pulleys 41 and 47 are respectively fixed to both end sides of a rotation shaft 56 which is disposed with the right and left direction as an axial direction. The both end sides of the rotation shaft 56 are rotatably supported by the right side plate and the left side plate respectively which are fixed in the inside of the housing 8. The pulleys 40, 42 and 44 are rotatably supported by fixed shafts 57 which are fixed to the right side plate in the inside of the housing 8 with the right and left direction as an axial direction, and the pulleys 46, 48 and 50 are rotatably supported by fixed shafts 58 which are fixed to the left side plate in the inside of the housing 8 with the right and left direction as an axial direction. The pulleys 43 and 49 are rotatably supported by a fixed shaft 59. The fixed shaft 59 is connected with a tension adjustment mechanism (not shown) for adjusting tensile forces of the belts 35 and 36.

The belt 35 is stretched over the pulleys 39 through 44 in this order. The belt 36 is stretched over the pulleys 45 through 50 in this order. Further, the belt 35 is stretched over the pulleys 39 through 44 so that the one face where a plurality of teeth is formed faces an inner peripheral side, and the belt 36 is stretched over the pulleys 45 through 50 so that the one face where a plurality of teeth is formed faces an inner peripheral side. The pulleys 39 through 42, 44 through 48, and 50 are toothed pulleys whose outer peripheral face is formed with teeth and the one faces of the belts 35 and 36 are contacted with outer peripheral faces of the pulleys 39 through 42, 44 through 48, and 50. On the other hand, the pulleys 43 and 49 are pulleys for a flat belt whose outer peripheral face is not formed with teeth and the other faces of the belts 35 and 36 are contacted with the outer peripheral faces of the pulleys 43 and 49.

The motor 53 is a stepping motor. The motor 53 is fixed to the left side plate which is fixed in the inside of the housing 8. The gear train 54 is a reduction gear train and, as shown in Fig. 3, includes a gear 62 which is fixed to the rotation shaft 55 on a right side relative to the pulley 45. Other gears which structure the gear train 54 connect the motor 53 with the gear 62. When the motor 53 is rotated, power of the motor 53 is transmitted to the rotation shaft 55 through the gear train 54 to rotate the pulleys 39 and 45. When the pulleys 39 and 45 are rotated, the belts 35 and 36 are rotated. In other words, when the pulleys 39 and 45 are rotated, the belts 35 and 36 are moved in their longitudinal directions. Further, when the pulleys 39 and 45 are rotated, remaining pulleys 40 through 44, and 46 through 50 are also rotated. In accordance with an embodiment of the present invention, the motor 53 may be a motor other than a stepping motor. Further, in this embodiment, the right and left direction is a direction perpendicular to moving directions of the belts 35 and 36 (in other words, longitudinal directions of the belts 35 and 36).

The shutter plate 38 is formed in a substantially rectangular flat plate shape whose longitudinal direction is the right and left direction. Both ends in the right and left direction of the shutter plate 38 are, as shown in Fig. 5, formed with a projection 38a which is protruded to an outer side in the right and left direction. The projection 38a is fixed to a shutter fixing member 64 which is fixed to the other face of each of the belts 35 and 36 (face where teeth are not formed). In other words, respective both end sides in the right and left direction of the shutter plate 38 are fixed to two belts 35 and 36 respectively. In accordance with an embodiment of the present invention, the shutter fixing member 64 may be integrally formed with the belts 35 and 36.

Eight shutter members 38 are fixed to the belts 35 and 36 so as to be adjacent to each other in the longitudinal directions of the belts 35 and 36. Specifically, as shown in Fig. 1(B), eight shutter members 38 are fixed to the belts 35 and 36 so as to be adjacent to each other in the longitudinal directions of the belts 35 and 36 so that the eight shutter plates 38 tightly close the opening part 8a without a space. In other words, when the eight shutter plates 38 close the opening part 8a, the eight shutter members 38 are fixed to the belts 35 and 36 so as to be adjacent to each other in the longitudinal directions of the belts 35 and 36 so that the shutter plates 38 adjacent to each other in the longitudinal directions of the belts 35 and 36 are tightly contacted with each other.

The eight shutter plates 38 are accommodated in the inside of the housing 8 when the opening part 8a is opened. A width in a short widthwise direction of the shutter plate 38 is set so that the shutter plates 38 accommodated in the inside of the housing 8 are not interfered with the housing 8. In this embodiment, when the opening part 8a is opened, the eight shutter plates 38 are accommodated on a rear face side in the inside of the housing 8. Specifically, when the opening part 8a is opened, the shutter plate 38 disposed on the most front side in a state that the eight shutter plates 38 have closed the opening part 8a is, as shown in Fig. 2, disposed on upper end sides of the pulleys 41 and 47 so as to be along the outer peripheral faces of the pulleys 41 and 47, and three shutter plates 38 adjacent to the shutter plate 38 are disposed so as to tightly contact with each other between the pulleys 41 and 47 and the pulleys 42 and 48. Further, two shutter plates 38 adjacent to the three shutter plates 38 are disposed on the rear end sides and the lower end sides of the pulleys 42 and 48 so as to be along the outer peripheral faces of the pulleys 42 and 48, and the two remaining shutter plates 38 are disposed so as to tightly contact with each other between the pulleys 42 and 48 and the pulleys 43 and 49. In this embodiment, a width of the shutter plate 38 in the longitudinal directions of the belts 35 and 36 which is disposed on the most front side in a state that the eight shutter plates 38 have closed the opening part 8a is set to be wider than widths in the longitudinal directions of the belts 35 and 36 of other shutter plates 38.

### (Operation of Head-up Display Device)

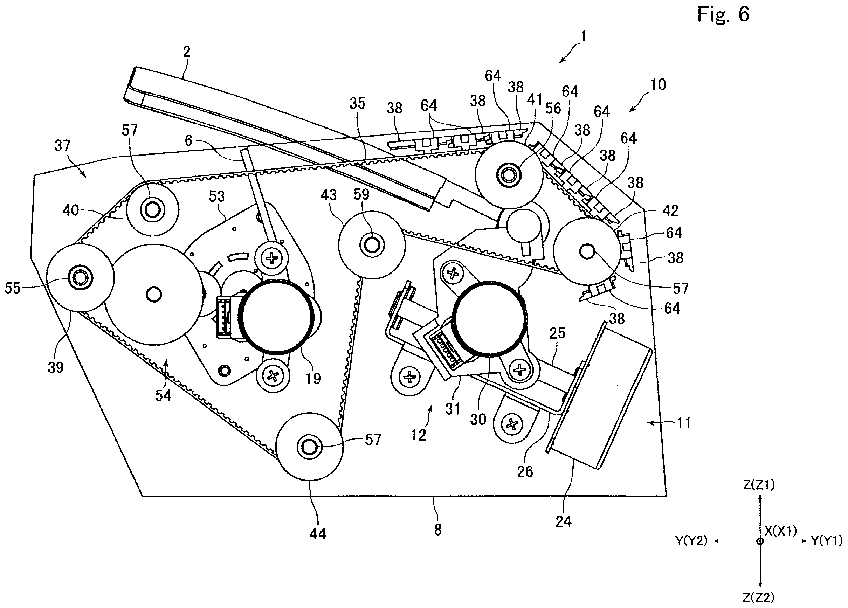

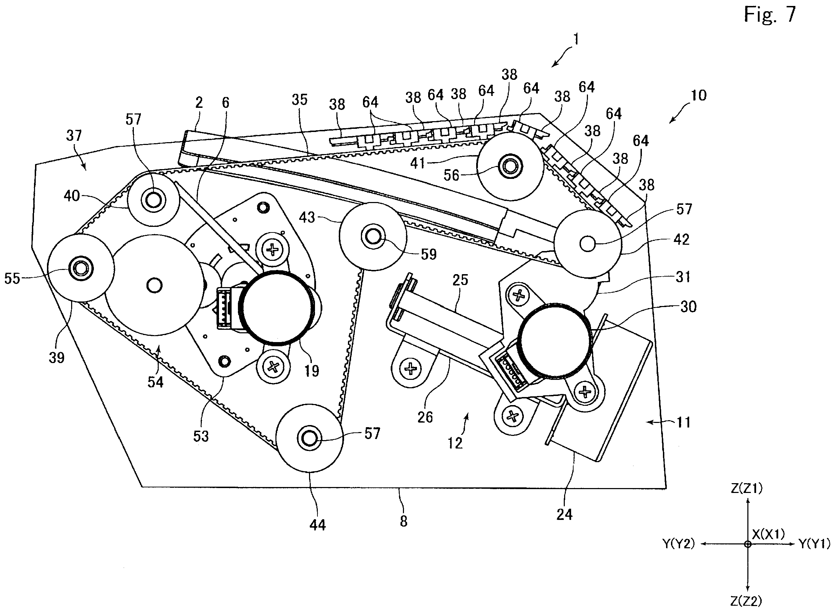

Figs. 6 and 7 are side views for explaining a state of the head-up display device 1 when the combiner 2 shown in Fig. 2 is moved between the rising-up position 2A and the accommodated position 2B. Fig. 8 is a side view for explaining a state of the head-up display device 1 when the combiner 2 shown in Fig. 2 is located at the accommodated position 2B.

In the following descriptions, a clockwise direction in Fig. 2 is referred to as a "clockwise direction" and a counterclockwise direction in Fig. 2 is referred to as a "counterclockwise direction".

In the HUD device 1 structured as described above, the combiner 2 is moved between the rising-up position 2A and the accommodated position 2B in conjunction with movement of the shutter plates 38. In other words, the combiner drive mechanism 11 moves the combiner 2 between the rising-up position 2A and the accommodated position 2B interlocked with movement of the belts 35 and 36. Specifically, the motor 24 and the motor 30 are rotated so as to be interlocked with rotation of the motor 53 and thereby the combiner 2 is moved between the rising-up position 2A and the accommodated position 2B. Further, the light baffle 6 is also turned in conjunction with movements of the combiner 2 and the shutter plates 38. Specifically, the motor 19 is rotated so as to be interlocked with rotations of the motors 24, 30 and 53. In this embodiment, the motors 19, 24, 30 and 53 are stepping motors and thus, when simple operations of the stepping motors are combined with each other in a controlled manner, the operation of the combiner 2, the operation of the shutter plates 38 and the operation of the light baffle 6 are interlocked with each other.

When the combiner 2 is located at the rising-up position 2A, the eight shutter plates 38 open the opening part 8a of the housing 8 and the light baffle 6 is disposed on a lower side relative to the combiner 2 (see Fig. 2). Further, when the combiner 2 is located at the accommodated position 2B, the eight shutter plates 38 close the opening part 8a and the light baffle 6 is disposed so as to be substantially parallel to the lens 5 (see Fig. 8).

When the combiner 2 is to be moved from the rising-up position 2A to the accommodated position 2B, the combiner 2, the light baffle 6 and the shutter plates 38 are successively moved as shown in Figs. 2, 6, 7 and 8 in this order. In other words, the combiner 2 is fallen down toward the front side, the light baffle 6 is turned in a counterclockwise direction, the belts 35 and 36 are move in a counterclockwise direction and thereby the eight shutter plates 38 are moved to an upper and front side so as to close the opening part 8a.

Further, when the combiner 2 is to be moved from the accommodated position 2B to the rising-up position 2A, the combiner 2, the light baffle 6 and the shutter plates 38 are successively moved as shown in Figs. 8, 7, 6 and 2 in this order. In other words, the combiner 2 rises up toward a rear side, the light baffle 6 is turned in a clockwise direction, the belts 35 and 36 are moved in a clockwise direction and thereby the eight shutter plates 38 are moved to a lower and rear side so as to open the opening part 8a.

### (Principal Effects in this Embodiment)

As described above, in this embodiment, a plurality of the shutter plates 38 for closing the opening part 8a formed in an upper face of the housing 8 is formed in a substantially rectangular flat plate shape whose longitudinal direction is the right and left direction. Further, in this embodiment, a plurality of the shutter plates 38 is fixed to the belts 35 and 36 so as to be adjacent to each other in the longitudinal directions of the belts 35 and 36. In addition, in this embodiment, a width in a short widthwise direction of the shutter plate 38 is set so that the shutter plates 38 accommodated in the housing 8 are not interfered with the housing 8. Therefore, according to this embodiment, while preventing interference of the respective shutter plates 38 with the housing 8, the respective shutter plates 38 are moved to a narrow space in the inside of the housing 8 by using the belts 35 and 36 and a plurality of the shutter plates 38 can be accommodated in the narrow space. Accordingly, in this embodiment, even when the shutter mechanism 10 for closing the opening part 8a is arranged in the HUD device 1, the size of the HUD device 1 can be reduced. Further, in this embodiment, since a plurality of the shutter plates 38 is accommodated in the inside of the housing 8, the outside appearance of the HUD device 1 is improved when the shutter plates 38 open the opening part 8a.

In this embodiment, both end sides in the right and left direction of the shutter plate 38 are respectively fixed to two belts 35 and 36. Therefore, according to this embodiment, rattling of the shutter plate 38 is prevented when the shutter plate 38 is to be moved to a narrow space in the inside of the housing 8 by using the belts 35 and 36. Accordingly, in this embodiment, the shutter plate 38 is smoothly moved to a narrow space in the inside of the housing 8.

In this embodiment, the belt 35 is stretched over six pulleys 39 through 44 and the belt 36 is stretched over six pulleys 45 through 50. Therefore, according to this embodiment, even when a space in the housing 8 into which the shutter plates 38 are accommodated is complicated, the belts 35 and 36 can be disposed along the complicated space. Accordingly, in this embodiment, even when an accommodation space for the shutter plates 38 is complicated, the shutter plates 38 are moved to the complicated space and accommodated.

### (Other Embodiments)

Although the present invention has been shown and described with reference to a specific embodiment, various changes and modifications will be apparent to those skilled in the art from the teachings herein.

In the embodiment described above, the belt 35 is stretched over six pulleys 39 through 44 and the belt 36 is stretched over six pulleys 45 through 50. However, the present invention is not limited to this embodiment. For example, the belts 35 and 36 may be stretched over two through five pulleys or may be stretched over seven or more pulleys. However, in a case that a space for accommodating the shutter plates 38 within the housing 8 is complicated, it is preferable that the number of the pulleys over which the belts 35 and 36 are stretched is large.

In the embodiment described above, the shutter mechanism 10 includes eight shutter plates 38. However, the number of shutter plates 38 included in the shutter mechanism 10 may be two through seven and may be nine or more. However, in a case that a space for accommodating the shutter plates 38 within the housing 8 is narrow and complicated, it is preferable that the number of the shutter plates 38 included in the shutter mechanism 10 is large so that a width in the short widthwise direction of the shutter plate 38 becomes narrow.

In the embodiment described above, the belts 35 and 36 are endless belts but the belts 35 and 36 may be ended belts having end parts in their longitudinal directions. Further, in the embodiment described above, the belts 35 and 36 are toothed belts but the belts 35 and 36 may be flat belts. In this case, the pulleys 39 through 42, 44 through 48 and 50 are pulleys for a flat belt whose outer peripheral face is not formed with teeth. Further, in the embodiment described above, the shutter mechanism 10 includes two belts 35 and 36. However, the number of the belts included in the shutter mechanism 10 may be one, three or more.

In the embodiment described above, the combiner 2 is moved between the rising-up position 2A and the accommodated position 2B interlocked with movement of the shutter plates 38. However, the present invention is not limited to this embodiment. For example, the combiner 2 may be moved from the accommodated position 2B to the rising-up position 2A after the shutter plates 38 have opened the opening part 8a. Further, the shutter plates 38 may close the opening part 8a after the combiner 2 has moved from the rising-up position 2A to the accommodated position 2B. Further, in the embodiment described above, the light baffle 6 is turned in conjunction with movements of the combiner 2 and the shutter plates 38, but the light baffle 6 may be turned separately from movements of the combiner 2 and the shutter plates 38.

### Reference Signs List:

- 1: HUD device (head-up display device)
- 2: combiner
- 2A: rising-up position
- 2B: accommodated position
- 3: display
- 6: light baffle
- 8: housing
- 8a: opening part
- 10: shutter mechanism
- 11: combiner drive mechanism
- 19: motor
- 35, 36: belt
- 37: belt drive mechanism
- 38: shutter plate
- 39: through 50 pulley

## Claims

1. A head-up display device (1) comprising:
a display (3);
a housing (8) which is formed with an opening part (8a) in an upper face and into which the display (3) is accommodated;
a combiner (2) on which display light emitted from the display (3) is incident and which displays a virtual image, with the combiner (2) being movable between a rising-up position where the combiner (2) rises so as to protrude from the opening part (8a) and an accommodated position where the combiner (2) is accommodated into an inside of the housing (8);
a shutter mechanism (10) configured to close the opening part (8a);
a reflection mirror (4), which is fixed on a lower face side and a front face side of the housing (8) and configured for reflecting light emitted from the display (3) toward an obliquely rear upper side;
a lens (5) which is fixed on an obliquely rear upper side with respect to the reflection mirror (4) in the inside of the housing (8) so that the lens (5) is disposed at a position where light reflected by the reflection mirror (4) is passed;
a movable light baffle (6) accommodated in the housing (8), wherein the light baffle (6) is disposed on a lower side with respect to the combiner (2) with the light baffle (6) being inclined to a rear side toward an upper side when the combiner (2) is located at the rising up-position, and wherein the light baffle (6) is disposed substantially parallel to the lens (5) when the combiner (2) is located at the accommodated position;
a turning shaft disposed on an obliquely rear upper side with respect to a lower end of the lens (5), the turning shaft being disposed with the right and left direction as an axial direction and being fixed at one end in a short widthwise direction of the light baffle (6); and
a motor (19) which is connected with the turning shaft through a coupling (18) so that the light baffle (6) is turnable by power of the motor (19) with the turning shaft as a turning center;
wherein the shutter mechanism (10) comprises a belt (35, 36), a belt drive mechanism (37) configured to move the belt (35, 36) in its longitudinal direction, and a plurality of shutter plates (38) for closing the opening part (8a); and
wherein a plurality of the shutter plates (38) is formed in a substantially rectangular plate shape whose longitudinal direction is a direction perpendicular to the longitudinal direction of the belt (35, 36) and the shutter plates (38) are fixed to the belt (35, 36) so as to be adjacent to each other in the longitudinal direction of the belt (35, 36).

2. The head-up display device (1) according to claim 1, wherein
the shutter mechanism (10) comprises two belts (35, 36) as the belt (35, 36) which are disposed on both end sides in the direction perpendicular to the longitudinal direction of the belt (35, 36) in the inside of the housing (8),
the belt (35, 36) is an endless belt (35, 36) formed in a loop shape, and
each of both end sides in the longitudinal direction of the shutter plate (38) is fixed to each of the two belts (35, 36).

3. The head-up display device (1) according to claim 2, wherein the belt drive mechanism (37) comprises three or more pulleys (39-44) over which the belt (35, 36) is stretched.

4. The head-up display device (1) according to one of claims 1 through 3, further comprising a combiner drive mechanism (11) configured to move the combiner (2) between the rising-up position and the accommodated position.

5. The head-up display device (1) according to claim 4, wherein the combiner drive mechanism moves (11) the combiner (2) between the rising-up position and the accommodated position in conjunction with movement of the belt (35, 36).

## Patentansprüche

1. Aufklapp-Anzeigevorrichtung (1), aufweisend:
eine Anzeige (3);
ein Gehäuse (8), das mit einem Öffnungsteil (8a) in einer oberen Fläche ausgebildet ist und in dem die Anzeige (3) aufgenommen ist;
eine Kombinationseinrichtung (2), auf der von der Anzeige (3) emittiertes Anzeigelicht auftrifft und die ein virtuelles Bild anzeigt, wobei die Kombinationseinrichtung (2) bewegbar ist zwischen einer angehobenen Position, in der sich die Kombinationseinrichtung (2) anhebt, um aus dem Öffnungsteil (8a) vorzustehen, und einer verstauten Position, in der die Kombinationseinrichtung (2) in einem Inneren des Gehäuses (8) untergebracht ist;
einen Verschlussmechanismus (10), der zum Schließen des Öffnungsteils (8a) ausgebildet ist;
einen Reflexionsspiegel (4), der auf einer Seite einer unteren Fläche und der Seite einer vorderen Fläche des Gehäuses (8) angebracht ist und dazu ausgebildet ist, von der Anzeige (3) emittiertes Licht in Richtung auf eine schräg hinten befindliche, obere Seite zu reflektieren;
eine Linse (5), die an einer schräg hinten befindlichen oberen Seite in Bezug auf den Reflexionsspiegel (4) im Inneren des Gehäuses (8) angebracht ist, so dass die Linse (5) an einer Stelle angeordnet ist, an der von dem Reflexionsspiegel (4) reflektiertes Licht hindurchgeht;
eine in dem Gehäuse (8) untergebrachte bewegliche Lichtlenkplatte (8), wobei die Lichtlenkplatte (8) an einer Unterseite in Bezug auf die Kombinationseinrichtung (2) angeordnet ist und die Lichtlenkplatte (8) nach hinten zu einer Oberseite geneigt ist, wenn sich die Kombinationseinrichtung (2) in der angehobenen Position befindet, und wobei die Lichtlenkplatte (8) im Wesentlichen parallel zu der Linse (5) angeordnet ist, wenn sich die Kombinationseinrichtung (2) in der verstauten Position befindet;
eine Drehwelle, die auf einer schräg hinten befindlichen oberen Seite in Bezug auf das untere Ende der Linse (5) angeordnet ist, wobei die Drehwelle mit der horizontalen Richtung als Axialrichtung angeordnet ist und an dem einen Ende in einer kurzen Breitenrichtung der Lichtlenkplatte (6) befestigt ist; und
einen Motor (19), der mit der Drehwelle durch eine Kopplung (18) verbunden ist, so dass die Lichtlenkplatte (6) durch Leistung des Motors (19) mit der Drehwelle als Drehzentrum drehbar ist;
wobei der Verschlussmechanismus (10) einen Riemen (35, 36), einen Riemenantriebsmechanismus (37), der zum Bewegen des Riemens (35, 36) in dessen Längsrichtung ausgebildet ist, und eine Mehrzahl von Verschlussplatten (38) zum Schließen des Öffnungsteils (8a) aufweist; und
wobei eine Mehrzahl der Verschlussplatten (38) in einer im Wesentlichen rechteckigen Plattenform ausgebildet ist, deren Längsrichtung eine Richtung rechtwinklig zu der Längsrichtung des Riemens (35, 36) ist, und wobei die Verschlussplatten (38) an dem Riemen (35, 36) derart befestigt sind, dass sie in Längsrichtung des Riemens (35, 36) einander benachbart sind.

2. Aufklapp-Anzeigevorrichtung (1) nach Anspruch 1,
wobei der Verschlussmechanismus (10) zwei Riemen (35, 36) als den Riemen (35, 36) aufweist, die an beiden Endseiten in der Richtung rechtwinklig zu der Längsrichtung des Riemens (35, 36) im Inneren des Gehäuses (8) angeordnet sind,
wobei der Riemen (35, 36) ein Endlosriemen ist, der in einer Schleifenform ausgebildet ist, und
wobei jede der beiden Endseiten in der Längsrichtung der Verschlussplatte (38) an einem jeweiligen der beiden Riemen (35, 36) befestigt ist.

3. Aufklapp-Anzeigevorrichtung (1) nach Anspruch 2,
wobei der Riemenantriebsmechanismus (37) drei oder mehr Riemenscheiben (39-44) aufweist, über die der Riemen (35, 36) gespannt ist.

4. Aufklapp-Anzeigevorrichtung (1) nach einem der Ansprüche 1 bis 3,
weiterhin aufweisend einen Kombinationseinrichtungs-Antriebsmechanismus (11), der dazu ausgebildet ist, die Kombinationseinrichtung (2) zwischen der angehoben Position und der verstauten Position zu bewegen.

5. Aufklapp-Anzeigevorrichtung (1) nach Anspruch 4,
wobei der Kombinationseinrichtungs-Antriebsmechanismus (11) die Kombinationseinrichtung (2) in Verbindung mit der Bewegung des Riemens (35, 36) zwischen der angehobenen Position und der verstauten Position bewegt.

## Revendications

1. Dispositif d'affichage tête haute (1), comprenant :
un affichage (3) ;
un logement (8), lequel est formé avec une partie d'ouverture (8a) dans une face supérieure et dans lequel l'affichage (3) est logé ;
un combinateur (2) sur lequel une lumière d'affichage émise à partir de l'affichage (3) est incidente et lequel affiche une image virtuelle, le combinateur (2) étant mobile entre une position d'élévation, où le combinateur (2) monte de manière à dépasser de la partie d'ouverture (8a), et une position logée, où le combinateur (2) est logé dans un intérieur du logement (8) ;
un mécanisme d'obturation (10) configuré pour fermer la partie d'ouverture (8a) ;
un miroir réflecteur (4), lequel est fixé sur un côté de face inférieure et un côté de face avant du logement (8) et configuré pour refléter la lumière émise à partir de l'affichage (3) vers un côté supérieur arrière obliquement ;
une lentille (5), laquelle est fixée sur un côté supérieur arrière obliquement par rapport au miroir réflecteur (4) dans le logement (8), de sorte que la lentille (5) est disposée en une position où la lumière réfléchie par le miroir réflecteur (4) est passée ;
un déflecteur de lumière mobile (6) logé dans le logement (8), dans lequel le déflecteur de lumière (6) est disposé sur un côté inférieur par rapport au combinateur (2), le déflecteur de lumière (6) étant incliné vers un côté arrière en direction d'un côté supérieur lorsque le combinateur (2) se trouve sur la position d'élévation, et dans lequel le déflecteur de lumière (6) est disposé en grande partie parallèlement à la lentille (5) lorsque le combinateur (2) se trouve dans la position logée ;
un arbre tournant disposé sur un côté supérieur arrière obliquement par rapport à une extrémité inférieure de la lentille (5), l'arbre tournant étant disposé avec la direction droite et gauche comme direction axiale et étant fixé sur une extrémité dans une direction courte dans le sens de la largeur du déflecteur de lumière (6), et
un moteur (19), lequel est relié à l'arbre tournant par le biais d'un accouplement (18), de sorte que le déflecteur de lumière (6) peut être tourné par la puissance du moteur (19) avec l'arbre tournant comme centre de rotation ;
dans lequel le mécanisme d'obturation (10) comprend une courroie (35, 36), un mécanisme de transmission par courroie (37) configuré pour déplacer la courroie (35, 36) dans sa direction longitudinale, et une pluralité de plaques d'obturation (38) pour fermer la partie d'ouverture (8a), et
dans lequel une pluralité des plaques d'obturation (38) est façonnée sous forme de plaques en grande partie rectangulaires dont la direction longitudinale est une direction perpendiculaire à la direction longitudinale de la courroie (35, 36), et les plaques d'obturation (38) sont fixées à la courroie (35, 36) de manière à être adjacentes entre elles dans la direction longitudinale de la courroie (35, 36).

2. Dispositif d'affichage tête haute (1) selon la revendication 1, dans lequel
le mécanisme d'obturation (10) comprend deux courroies (35, 36) pour la courroie (35, 36), lesquelles sont disposées sur deux côtés d'extrémité dans la direction perpendiculaire à la direction longitudinale de la courroie (35, 36) dans le logement (8) ;
la courroie (35, 36) est une courroie sans fin (35, 36) façonnée en forme de boucle, et
chacun des deux côtés d'extrémité dans la direction longitudinale de la plaque d'obturation (38) est fixé à chacune des deux courroies (35, 36).

3. Dispositif d'affichage tête haute (1) selon la revendication 2, dans lequel le mécanisme de transmission par courroie (37) comprend trois poulies pour courroie (39-44) ou plus sur lesquelles la courroie (35, 36) est tendue.

4. Dispositif d'affichage tête haute (1) selon l'une quelconque des revendications 1 à 3, comprenant en outre un mécanisme de transmission de combinateur (11) configuré pour déplacer le combinateur (2) entre la position d'élévation et la position logée.

5. Dispositif d'affichage tête haute (1) selon la revendication 4, dans lequel le mécanisme de transmission de combinateur (11) déplace le combinateur (2) entre la position d'élévation et la position logée conjointement au déplacement de la courroie (35, 36).
